(19) Europäisches Patentamt
European Patent Office
Office européen des brevets

(11) **EP 4 617 159 A1**

(12) **EUROPÄISCHE PATENTANMELDUNG**

(43) Veröffentlichungstag:
**17.09.2025 Patentblatt 2025/38**

(21) Anmeldenummer: **24163266.0**

(22) Anmeldetag: **13.03.2024**

(51) Internationale Patentklassifikation (IPC):
*B62K 5/08* (2006.01)   *B62K 5/10* (2013.01)

(52) Gemeinsame Patentklassifikation (CPC):
**B62K 5/10; B62K 5/08**

(84) Benannte Vertragsstaaten:
**AL AT BE BG CH CY CZ DE DK EE ES FI FR GB GR HR HU IE IS IT LI LT LU LV MC ME MK MT NL NO PL PT RO RS SE SI SK SM TR**
Benannte Erstreckungsstaaten:
**BA**
Benannte Validierungsstaaten:
**GE KH MA MD TN**

(71) Anmelder: **Technische Universität Graz**
**8010 Graz (AT)**

(72) Erfinder: **Walch, Simon**
**8010 Graz (AT)**

(74) Vertreter: **KLIMENT & HENHAPEL**
**Patentanwälte OG**
**Gonzagagasse 15/2**
**1010 Wien (AT)**

(54) **RADAUFHÄNGUNGSANORDNUNG**

(57) Radaufhängungsanordnung (1) zur Anbindung von zwei einander gegenüberliegenden Rädern (2) an ein Chassis eines neigbaren Fahrzeugs, umfassend für jedes der zwei Räder (2) jeweils
- einen Radträger (6),
- einen ersten Querlenker (7) und einen zweiten Querlenker (8), die jeweils drehbar mit dem Radträger verbunden und zur drehbaren Verbindung mit dem Chassis eingerichtet sind,
- eine Feder-Dämpfer-Einrichtung (10), die mit dem zweiten Querlenker drehbar verbunden ist,
weiters umfassend eine Wippe (11), die zur drehbaren Verbindung mit dem Chassis eingerichtet ist, wobei die Wippe um eine Drehachse (12) drehbar ist und wobei die Feder-Dämpfer-Einrichtungen drehbar mit der Wippe verbunden sind, um bei einer Überführung der Radaufhängungsanordnung aus einer Ausgangsstellung (9) in eine geneigte Stellung die Wippe um ihre Drehachse (12) zu verdrehen. Erfindungsgemäß ist vorgesehen, dass zumindest eine passive Stabilisierungsfeder (14) vorgesehen ist, die zur Verbindung mit dem Chassis eingerichtet und mit der Wippe verbunden ist, um die Radaufhängungsanordnung aus der geneigten Stellung in die Ausgangsstellung zu drängen.

Fig. 1

**Beschreibung**

GEBIET DER ERFINDUNG

Die vorliegende Erfindung betrifft eine Radaufhängungsanordnung zur Anbindung von zwei einander gegenüberliegenden Rädern an ein Chassis eines neigbaren Fahrzeugs, insbesondere neigbaren Dreirads, die Radaufhängungsanordnung umfassend für jedes der zwei Räder jeweils

- einen Radträger,
- einen ersten Querlenker und einen zweiten Querlenker, die jeweils drehbar mit dem Radträger verbunden und zur drehbaren Verbindung mit dem Chassis eingerichtet sind, wobei in einer Ausgangsstellung der Radaufhängungsanordnung der erste Querlenker über dem zweiten Querlenker angeordnet ist,
- eine Feder-Dämpfer-Einrichtung, die mit dem zweiten Querlenker drehbar verbunden ist,

die Radaufhängungsanordnung weiters umfassend eine Wippe, die zur drehbaren Verbindung mit dem Chassis eingerichtet ist, wobei die Wippe um eine Drehachse drehbar ist und wobei die Feder-Dämpfer-Einrichtungen an einander gegenüberliegenden Abschnitten der Wippe drehbar mit der Wippe verbunden sind, um bei einer Überführung der Radaufhängungsanordnung aus der Ausgangsstellung in eine geneigte Stellung die Wippe um ihre Drehachse zu verdrehen.

STAND DER TECHNIK

Radaufhängungsanordnungen für paarweise aufgehängte Räder neigbarer Fahrzeuge sind aus dem Stand der Technik heraus grundsätzlich bekannt. Bei solchen neigbaren Fahrzeugen kann es sich beispielsweise um neigbare Dreiräder handeln, insbesondere um neigbare Dreiräder mit zwei lenkbaren Vorderrädern.

Radaufhängungen dieser Art folgen der Grundidee, durch Neigung der Rotationsachse eines Rades zu erreichen, dass die Scherkräfte, wie sie beispielsweise beim Fahren von Kurven entstehen und dabei auf das Rad wirken, möglichst klein werden.

Zweck dieser Neigung kann beispielsweise die Verbesserung der Traktion des Rades am befahrenen Untergrund oder die Verbesserung des Komforts der mit dem Fahrzeug reisenden Personen bzw. die Verbesserung der Ladungssicherung mitgeführter Gegenstände sein, da auf diese in Kurven nur geringe bzw. bei exakter Ausrichtung keine, Scherkräfte wirken.

Die Scherkräfte verschwinden, wie aus allgemeinen mechanischen Prinzipien ableitbar ist, genau dann, wenn die aus der Kurvenfahrt resultierende Zentripetalkraft gleich der Kurven-Radialkomponente der von der Schwerkraft hervorgerufenen Kraft auf die Radaufhängung ist.

Dieses Gleichgewicht ist nicht stabil und muss aktiv durch Aufwendung von Korrekturkräften gehalten werden. Dies gilt insbesondere für die Rückstellung in eine neigungsfreie Stellung der Räder, beispielsweise nachdem die Kurvenfahrt beendet ist.

Dies kann, etwa bei Sportgeräten, welche dem genannten Prinzip folgen, durch Muskelkraft eines Benutzers geschehen oder auf technischem Weg durch Einsatz entsprechender, die nötigen Korrekturkräfte ausübender aktive Aktuatoren.

Aus der EP3056418A1 ist ein neigbares Dreirad mit zwei lenkbaren Vorderrädern bekannt, wobei ein als Elektromotor oder fluidischer Antrieb ausgebildeter Aktuator vorgesehen ist, um das Rollverhalten aktiv zu beeinflussen. Entsprechend aufwendig und energieintensiv ist diese Lösung, was als nachteilig zu werten ist.

Ein weiterer Nachteil bekannter Lösungen ist, dass in der Regel Bedürfnisse gehbehinderter Menschen nicht berücksichtigt sind. Insbesondere ist das Aufsteigen auf die genannten neigbaren Fahrzeuge kaum möglich, weil die neigbaren Fahrzeuge hierfür bei Stillstand nicht stabil genug vertikal ausgerichtet stehen bleiben.

AUFGABE DER ERFINDUNG

Es ist daher Aufgabe der vorliegenden Erfindung eine Radaufhängungsanordnung zur Anbindung von zwei einander gegenüberliegenden Rädern an ein Chassis eines neigbaren Fahrzeugs, insbesondere neigbaren Dreirads, zur Verfügung zu stellen, welche die oben genannten Nachteile überwindet. Insbesondere soll die erfindungsgemäße Lösung möglichst einfach bzw. mit wenig Aufwand realisierbar sein und möglichst wenig Energie verbrauchen. Vorzugsweise soll die erfindungsgemäße Lösung auch gehbehinderten Menschen das Aufsteigen auf neigbare Fahrzeuge und damit deren Benutzung ermöglichen.

DARSTELLUNG DER ERFINDUNG

Kern der vorliegenden Erfindung ist es, die zuvor beschriebene Stabilisierung des Gleichgewichts zwischen aus der Kurvenfahrt resultierender Zentripetalkraft und der Kurven-Radialkomponente der von der Schwerkraft hervorgerufenen Kraft auf die Radaufhängung passiv zu gewährleisten. Eine Vorrichtung zur Stabilisierung des genannten Gleichgewichts wird dabei als passiv verstanden, wenn sie ausschließlich passive Komponenten und somit insbesondere keine Motoren, Sensoren, Daten verarbeitenden Komponenten, oder Aktuatoren umfasst. Entsprechend wird im Betrieb durch die passiven Komponenten keine Energie verbraucht. Dabei kann die passive Lösung bzw. können die passiv wirkenden Elemente/Komponenten so ausgelegt sein, dass die Radaufhängung aus einer geneigten Radstellung in eine aufrechte Radstellung zurückgeführt wird, sobald eine die geneigte Radstellung auslösende Kraft aufhört zu wirken.

Konkret ist es bei einer Radaufhängungsanordnung zur Anbindung von zwei einander gegenüberliegenden Rädern an ein Chassis eines neigbaren Fahrzeugs, insbesondere neigbaren Dreirads, , die Radaufhängungsanordnung umfassend für jedes der zwei Räder jeweils

- einen Radträger,
- einen ersten Querlenker und einen zweiten Querlenker, die jeweils drehbar mit dem Radträger verbunden und zur drehbaren Verbindung mit dem Chassis eingerichtet sind, wobei in einer Ausgangsstellung der Radaufhängungsanordnung der erste Querlenker über dem zweiten Querlenker angeordnet ist,
- eine Feder-Dämpfer-Einrichtung, die mit dem zweiten Querlenker drehbar verbunden ist,
- die Radaufhängungsanordnung weiters umfassend eine Wippe, die zur drehbaren Verbindung mit dem Chassis eingerichtet ist, wobei die Wippe um eine Drehachse drehbar ist und wobei die Feder-Dämpfer-Einrichtungen an einander gegenüberliegenden Abschnitten der Wippe drehbar mit der Wippe verbunden sind, um bei einer Überführung der Radaufhängungsanordnung aus der Ausgangsstellung in eine geneigte Stellung die Wippe um ihre Drehachse zu verdrehen, erfindungsgemäß vorgesehen, dass zumindest eine passive Stabilisierungsfeder vorgesehen ist, die zur Verbindung mit dem Chassis eingerichtet und mit der Wippe verbunden ist, um die Radaufhängungsanordnung aus der geneigten Stellung in die Ausgangsstellung zu drängen.

Wie gesagt, kann es sich bei solchen neigbaren Fahrzeugen um Fahrzeuge mit zwei Rädern an einer gelenkten Vorderachse und einem Rad an der Hinterachse handeln. Ebenso kann es sich bei solchen neigbaren Fahrzeugen um Fahrzeuge mit einem lenkbaren Vorderrad und zwei, insbesondere nicht gelenkten, Rädern an einer Hinterachse handeln, wobei an der Hinterachse ein Wankmechanismus vorgesehen ist.

Entsprechend sind unter "Rädern" im Zusammenhang mit der erfindungsgemäßen Radaufhängungsanordnung Vorderräder oder Hinterräder zu verstehen, wobei die Räder insbesondere lenkbar sein können.

Unter Chassis ist hier und im Folgenden ein Fahrgestell bzw. Rahmen eines Fahrzeugs zu verstehen, sofern nichts anderes angegeben ist.

Die Ausgangsstellung der Radaufhängungsordnung ist bei bestimmungsgemäßer Verwendung der Radaufhängungsanordnung eine senkrechte Position, Anordnung bzw. Zustand. Wenn die Radaufhängungsanordnung Teil eines neigbaren Fahrzeugs ist und insbesondere die zwei Räder mit der Radaufhängungsanordnung am Chassis des neigbaren Fahrzeugs angebunden sind, dann ist entsprechend das Fahrzeug nicht geneigt, wenn sich die Radaufhängungsanordnung in der Ausgangsstellung befindet. Analog befindet sich die Radaufhängungsanordnung in einer geneigten Stellung, wenn das Fahrzeug um einen Wankwinkel geneigt ist, und umgekehrt.

Die jeweilige Feder-Dämpfer-Einrichtung kann ein einziges Feder-Dämpfer-Element sein oder kann auch aus mehreren Elementen bestehen, insbesondere aus mindestens einer Feder und mindestens einem Dämpfer, die gemeinsam die Feder-Dämpfer-Einrichtung ausbilden.

Die zwei Feder-Dämpfer-Einrichtungen sind zumindest abschnittsweise zwischen den unteren, zweiten Querlenkern und der Wippe angeordnet. Die Wippe wiederum verbindet die zwei Feder-Dämpfer-Elemente miteinander und ist dazu eingerichtet, mit dem Chassis drehend verbunden bzw. am Chassis drehend gelagert zu sein. Diese Konstellation erlaubt ein Drehen des Chassis bzw. Rahmens um die Fahrzeuglängsachse und somit ein Wanken des Fahrzeugs.

Im Fall, dass die Radaufhängungsanordnung nicht mit dem Chassis verbunden ist, ist bezüglich der Drehachse jedenfalls davon auszugehen, dass die Wippe um eine Drehachse drehbar ist, die jener Drehachse entspricht, die gegeben ist, wenn die Wippe bestimmungsgemäß drehbar mit dem Chassis verbunden ist.

Vorzugsweise ist die Drehachse der Wippe parallel zu Drehachsen, um die die Feder-Dämpfer-Einrichtungen gegenüber den zweiten Querlenkern verdrehbar sind.

Ebenso ist die Drehachse der Wippe vorzugsweise parallel zu Drehachsen, um die die Querlenker drehbar sind, insbesondere wenn sie mit dem Chassis drehbar verbunden sind.

Die Feder-Dämpfer-Einrichtungen sind, wie gesagt, an einander gegenüberliegenden Abschnitten der Wippe drehbar mit der Wippe verbunden, um bei einer Überführung der Radaufhängungsanordnung aus der Ausgangsstellung in eine geneigte Stellung die Wippe um ihre Drehachse um einen Wankwinkel zu verdrehen, insbesondere wenn die Wippe drehbar mit dem Chassis verbunden ist.

Die passive Stabilisierungsfeder, welche zur Verbindung mit dem Chassis eingerichtet und mit der Wippe verbunden ist, ist mit der Wippe insbesondere wirkverbunden, d.h. unter der Verbindung zwischen der passiven Stabilisierungsfeder und der Wippe ist insbesondere eine Wirkverbindung zu verstehen.

Beim Drängen der Radaufhängungsanordnung aus der geneigten Stellung in die Ausgangsstellung wird ein Stützmoment eingebracht, das jedenfalls zur Stabilisierung des Fahrzeugs beiträgt. Je nach Auslegung fällt das Drängen in die Ausgangsstellung mehr oder weniger stark aus. Insbesondere kann durch entsprechende Auslegung erreicht werden, dass das neigbare Fahrzeug bei Stillstand in der Senkrechten gehalten und damit ein Aufsteigen für gehbehinderte Personen ermöglicht wird, wenn die Radaufhängungsanordnung Teil des neigbaren Fahrzeugs ist und insbesondere die zwei Räder mit der Radaufhängungsanordnung am Chassis des neigbaren Fahrzeugs angebunden sind.

Die Stärke des Drängens in die Ausgangsstellung kann abhängig vom Wankwinkel sein, was mittels geeigneter, insbesondere progressiver, Federkennlinie der passiven Stabilisierungsfeder erreicht werden kann.

Ungewolltem Wanken wird durch die passive Stabilisierungsfeder jedenfalls entgegengewirkt. Die Stabilisierungsfeder kann einteilig oder mehrteilig ausgeführt sein, d.h. sie kann ein Federelement oder mehrere Federelemente enthalten, wobei bei mehreren Federelementen diese nicht gleich sein müssen, sondern auch unterschiedlich sein können und insbesondere unterschiedliche Federkennlinien - insbesondere lineare und/oder progressive Federkennlinien - aufweisen können.

Die erfindungsgemäße Radaufhängungsanordnung dient also als Stabilisierungshilfe eines neigbaren Fahrzeugs.

Da die passive Stabilisierungsfeder einerseits und die zwei Feder-Dämpfer-Einreichungen andererseits zwischen unterschiedlichen Punkten ("Ankerpunkten") befestigt sind, ist eine negative Beeinflussung der Fahrwerkseigenschaften durch die passive Stabilisierungsfeder praktisch ausgeschlossen oder nur in vernachlässigbarem minimalen Ausmaß vorhanden.

In einer bevorzugten Ausführungsform der erfindungsgemäßen Radaufhängungsanordnung schließen in der Ausgangsstellung Längsachsen der Feder-Dämpfer-Einrichtungen einen Winkel ein, der größer als 90°, vorzugsweise größer als 120° ist. Dies erlaubt eine extrem kompakte Bauweise und bewirkt eine gewisse inhärente Progression der resultierenden Federkennlinie.

Bei einem Winkel zwischen den Längsachsen der Feder-Dämpfer-Einrichtungen, welcher größer als 90° ist, beträgt ein Winkel zwischen der Längsachse der jeweiligen Feder-Dämpfer-Einrichtung und der Wippe bzw. der Horizontalen, wenn die Radaufhängungsanordnung bei bestimmungsgemäßer Verwendung in der Ausgangsstellung ist, entsprechend höchstens 45°.

Analog gilt für einen Winkel zwischen den Längsachsen der Feder-Dämpfer-Einrichtungen, welcher größer als 120° ist, dass der Winkel zwischen der Längsachse der jeweiligen Feder-Dämpfer-Einrichtung und der Wippe bzw. der Horizontalen, wenn die Radaufhängungsanordnung bei bestimmungsgemäßer Verwendung in der Ausgangsstellung ist, entsprechend höchstens 30° beträgt.

Bei einer bevorzugten Ausführungsform der erfindungsgemäßen Radaufhängungsanordnung umfasst die zumindest eine passive Stabilisierungsfeder eine, insbesondere modulare, Torsionsfeder mit progressiver Federkennlinie. Der Einsatz einer Torsionsfeder erlaubt eine besonders kompakte Bauweise.

Eine modulare Torsionsfeder als passive Stabilisierungsfeder ist im gegebenen Zusammenhang eine, zur leichten Anpassung an die Bedürfnisse des Fahrers hinsichtlich Fahrergewicht und Fahrverhalten, austauschbare Torsionsfeder. Es können also Torsionsfedern unterschiedlicher Charakteristik, insbesondere unterschiedlicher Federkonstanten, verwendet werden, um die jeweils verbaute Torsionsfeder an die Bedürfnisse eines Benutzers individuell anzupassen. Vorzugsweise ist die Längsachse bzw. Verdrehachse dieser Torsionsfeder dabei parallel zur Drehachse der Wippe.

Gemäß dem oben Gesagten kann die passive Stabilisierungsfeder auch in diesem Fall ein oder mehrere weitere Federelemente umfassen, insbesondere mit Federkennlinien, die sich von jener der Torsionsfeder unterscheiden und beispielsweise linear sein können.

Entsprechend kann es alternativ oder zusätzlich vorgesehen sein, dass die zumindest eine passive Stabilisierungsfeder zumindest ein Stabilisierungsfederelement mit linearer Federkennlinie umfasst.

Ein solches Stabilisierungsfederelement mit linearer Kennlinie bzw. eine Linearfeder erweitert die Abstimmungsmöglichkeiten, insbesondere hinsichtlich der Dimensionierung der passiven Stabilisierungsfeder für erhöhte Lasten. Dies ist deshalb von Bedeutung, weil das Verhältnis von Fahrer- zu Fahrzeuggewicht bei einem mit Muskelkraft und/oder einem leichten Elektromotor betriebenen Fahrzeug, bei welchem die erfindungsgemäße Radaufhängungsanordnung verwendet werden kann, im Vergleich zu aus dem Stand der Technik bekannten Vorrichtungen beispielsweise für Krafträder, wesentlich größer ausfällt.

Bei einer bevorzugten Ausführungsform der erfindungsgemäßen Radaufhängungsanordnung ist die jeweilige Feder-Dämpfer-Einrichtung als Feder-Dämpfer-Element ausgeführt. Wiederum wird insbesondere die Kompaktheit des Aufbaus erhöht.

Das Feder-Dämpfer-Element kann hierbei auch als Feder-Dämpfer-Einheit oder als Federbein bezeichnet werden. Beispielsweise kann es als, insbesondere kompakte, Schraubenfeder mit hydraulischem Stoßdämpfer ausgeführt sein. D.h. es kann vorgesehen sein, dass das Feder-Dämpfer-Element zumindest eine Schraubenfeder umfasst.

Bei einer besonders bevorzugten Ausführungsform der erfindungsgemäßen Radaufhängungsanordnung ist das jeweilige Feder-Dämpfer-Element als Gasdruckfeder ausgebildet.

Eine Gasdruckfeder wird auch Luftfeder genannt. Ihr Vorteil liegt insbesondere in der inhärenten Progression, welche sich aus allgemeinen grundlegenden Gesetzmäßigkeiten für die Kompression von näherungsweise idealen Gasen ergibt.

Progression bedeutet, dass die Federkonstante der betreffenden Feder eine Funktion der Dehnung bzw. Kompression der Feder ist, wobei sich die Federkonstante mit zunehmender Kompression erhöht.

Die Federkraft resultiert bei solchen Federn aus dem Gasdruck in einem Zylinder, welcher gleich der (Feder-) Kraft pro Querschnittsfläche des Zylinders der Gasdruckfeder ist. Für den Gasdruck gilt seinerseits, dass das Produkt aus Gasdruck und Volumen, welches gleich der Querschnittsfläche multipliziert mit der Eindringtiefe eines Stempels in den Zylinder ist, konstant ist.

Mittels geeigneter fester Körper, welche manuell in das Zylindervolumen eingebracht werden können, sog. Token, kann das Gasvolumen verringert werden, um die Federcharakteristik, insbesondere die Federkennlinie, zu beeinflussen. In diesem Sinne können Gasdruckfedern verstellbar ausgeführt sein, was einen weiteren Vorteil darstellt.

Neben Gasdruckfedern bzw. Luftfedern sind auch andere Bauarten von Federn von der Erfindung umfasst. Diese können beispielsweise progressive Schraubenfedern mit einem Ganghöhengradienten sein. Ebenso denkbar wären Elliptikfedern oder Blattfedern.

Bei einer besonderen Ausführungsform der erfindungsgemäßen Radaufhängungsanordnung weist der jeweilige Radträger einen ersten Abschnitt und einen zweiten Abschnitt auf, wobei der jeweilige erste Querlenker mit dem ersten Abschnitt um eine erste Querlenkerdrehachse drehbar verbunden ist und der jeweilige zweite Querlenker mit dem ersten Abschnitt um eine parallel zur ersten Querlenkerdrehachse verlaufende, zweite Querlenkerdrehachse drehbar verbunden ist und wobei der zweite Abschnitt zur drehbaren Verbindung mit einem der zwei Räder eingerichtet ist und relativ zum ersten Abschnitt um eine Schwenkachse verschwenkbar ist, wobei die Schwenkachse normal auf die erste Querlenkerdrehachse und die zweite Querlenkerdrehachse steht.

Vorzugsweise sind die ersten Querlenkerdrehachsen und die zweiten Querlenkerdrehachsen parallel zur Drehachse der Wippe.

Der zweite Abschnitt des jeweiligen Radträgers ist dabei zur drehbaren Verbindung mit einem der zwei Räder eingerichtet, indem dieser z.B. eine Radachse aufweist.

Da die Radaufhängungsanordnung zur Anbindung zweier einander gegenüberliegender Räder eingerichtet ist und der zweite Abschnitt des jeweiligen Radträgers relativ zum ersten Abschnitt um eine Schwenkachse verschwenkbar ist, sind die genannten Räder lenkbar. Diese Lenkung erfolgt beispielsweise durch ein Lenkgestänge zur Bewegung des zweiten Abschnitts entsprechend der Bewegung eines Lenkers, welcher seinerseits vom Benutzer bewegt wird.

D.h. es wird in einfacher und kompakter Weise eine Lenkbarkeit der zwei einander gegenüberliegenden Räder gewährleistet.

Bei einer bevorzugten Ausführungsform der erfindungsgemäßen Radaufhängungsanordnung sind die einander gegenüberliegenden Abschnitte der Wippe, an denen die Feder-Dämpfer-Einrichtungen drehbar mit der Wippe verbunden sind, in der Ausgangsstellung jeweils zwischen dem ersten Querlenker und dem zweiten Querlenker angeordnet.

Die einander gegenüberliegenden Abschnitte der Wippe sind also jeweils zwischen dem zugehörigen ersten Querlenker und dem zugehörigen zweiten Querlenker, also zwischen dem rechten/linken ersten Querlenker sowie dem rechten/linken zweiten Querlenker, angeordnet.

Die Kompaktheit wird hierdurch weiter erhöht. Zudem kann sich eine solche Anordnung dahingehend vorteilhaft auswirken, dass eine gewisse inhärente Progression der resultierenden Federkennlinien erreicht werden kann.

Analog zum oben Gesagten ist erfindungsgemäß ein neigbares Fahrzeug, insbesondere neigbares Dreirad, vorgesehen, umfassend eine erfindungsgemäße Radaufhängungsanordnung, mit der zwei einander gegenüberliegende Räder an ein Chassis des neigbaren Fahrzeugs angebunden sind, wobei die ersten Querlenker und die zweiten Querlenker drehbar mit dem Chassis verbunden sind, wobei die Wippe drehbar mit dem Chassis verbunden ist und wobei die zumindest eine passive Stabilisierungsfeder mit dem Chassis verbunden ist.

Statt dem Begriff "Dreirad" ist auch der Begriff "Trike" gebräuchlich.

Bei einer bevorzugten Ausführungsform des erfindungsgemäßen neigbaren Fahrzeuges sind die zwei Räder lenkbare Vorderräder.

Grundsätzlich wären auch Ausführungsformen denkbar, bei denen die zwei Räder, insbesondere lenkbare, Hinterräder sind.

Insbesondere bietet die Ausführungsform, gemäß welcher die zwei Räder lenkbare Vorderräder sind, den Vorteil, dass alle wesentlichen Komponenten des Fahrzeugs, wie insbesondere die Radaufhängungsanordnung, vom Benutzer aus gesehen vor dem Benutzer, also in Vorwärts-Fahrtrichtung liegen. Der Fahrer hat damit zu jedem Zeitpunkt die wesentlichen Komponenten des Fahrzeugs im Blick und kann auf gegebenenfalls unerwünschtes Verhalten einzelner Komponenten rasch reagieren.

Bei einer bevorzugten Ausführungsform des erfindungsgemäßen neigbaren Fahrzeuges ist ein Elektromotor für den Antrieb des neigbaren Fahrzeugs vorgesehen.

Es kann vorgesehen sein, dass der Elektromotor alleine den Antrieb des neigbaren Fahrzeugs bewerkstelligt. Alternativ oder zusätzlich kann vorgesehen sein, dass der Elektromotor unterstützend zu einem Antrieb aus Muskelkraft wirkt.

Elektromotoren mit hinreichender Leistung können extrem klein und leicht ausgeführt werden, was sich vorteilhaft für die Handhabung des neigbaren Fahrzeugs durch den Benutzer auswirkt und außerdem hilft, Energie zu sparen. Entsprechend kompakt und relativ leicht kann eine, insbesondere aufladbare, Batterie, beispielsweise ein Lithium-Ionen-Akkumulator, als Energiespeicher sein, welche Batterie im oder am neigbaren Fahrzeug befestigt ist.

Bei einer bevorzugten Ausführungsform des erfindungsgemäßen neigbaren Fahrzeuges sind Pedale vorgesehen, um das neigbare Fahrzeug durch Muskelkraft antreiben zu können, wobei ein Sperrmechanismus vorgesehen ist, um das Verdrehen der Wippe um ihre Drehachse zu verhindern. Entsprechend bewirkt der Sperrmechanismus, dass das neigbare Fahrzeug seinen Wankwinkel nicht ändert, wobei der Sperrmechanismus vornehmlich dazu dient, das problemlose Aufsteigen auf das Fahrzeug zu ermöglichen, wenn dieses senkrecht steht, also den Wankwinkel null aufweist. Dabei kann vorgesehen sein, dass der Sperrmechanismus nur in diesem Zustand, also bei senkrecht stehendem Fahrzeug, aktivierbar ist.

D.h. es muss kein weiteres Antriebsmittel, insbesondere kein Elektromotor, vorgesehen sein, was Material, Gewicht und Kosten spart. Ein weiteres Antriebsmittel ist aber auch nicht ausgeschlossen.

Die genannte Ausführungsform kann insbesondere auch mit der Ausführungsform umfassend einen Elektromotor kombinierbar sein, sodass zusätzlich zu Pedalen ein Elektromotor vorgesehen sein kann, der dann unterstützend zum Antrieb des neigbaren Fahrzeugs wirkt. Dabei kann vorgesehen sein, dass der Grad der Unterstützung, vorzugsweise stufenlos, von keiner Unterstützung bis hin zu rein elektrischem Antrieb durch den Elektromotor regelbar ist. Der Komfort für den Benutzer wird hierdurch entsprechend erhöht.

KURZE BESCHREIBUNG DER FIGUREN

Die Erfindung wird nun anhand eines Ausführungsbeispiels näher erläutert. Die Zeichnungen sind beispielhaft und sollen den Erfindungsgedanken zwar darlegen, ihn aber keinesfalls einengen oder gar abschließend wiedergeben.

Dabei zeigt:

Fig. 1    eine schematische Darstellung einer erfindungsgemäßen Radaufhängungsanordnung in einer Ausgangsstellung

Fig. 2    eine Detailansicht der Front eines neigbaren Dreirads mit lenkbaren Vorderrädern, die mit einer erfindungsgemäßen Radaufhängungsanordnung an ein Chassis des neigbaren Dreirads angebunden sind

Fig. 3    eine schematische Darstellung der erfindungsgemäßen Radaufhängungsanordnung in der Ausgangsstellung, wobei nur eine Seite mit einem Rad gezeigt ist

Fig. 4    eine Darstellung analog zu Fig. 3, wobei die Radaufhängungsanordnung in einer geneigten Stellung ist

Fig. 5    ein Diagramm eines zu stützenden Moments in Abhängigkeit eines Wankwinkels und entsprechende Torsionsmomente für drei unterschiedliche Torsionsfederkennlinien

WEGE ZUR AUSFÜHRUNG DER ERFINDUNG

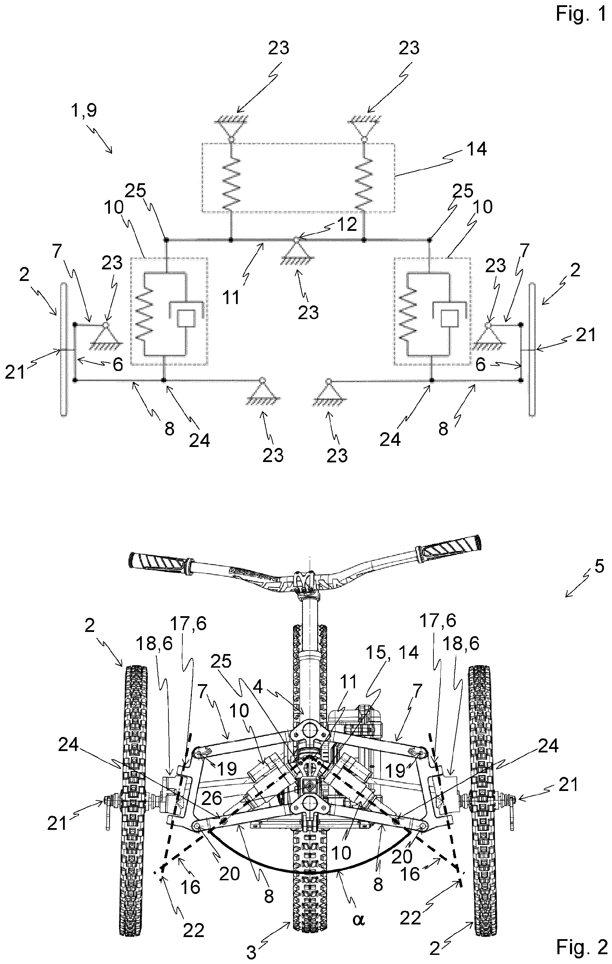

Fig. 1 zeigt eine schematische Darstellung einer erfindungsgemäßen Radaufhängungsanordnung 1 in einer Ausgangsstellung 9. Diese ist zur Anbindung von zwei einander gegenüberliegenden, auf jeweils einer Radachse 21 aufgehängten, Rädern 2 über Anbindungspunkte 23 an ein Chassis 4 (nicht dargestellt) eines neigbaren Fahrzeugs eingerichtet. Die Radaufhängungsanordnung 1 umfasst dabei für jedes der zwei Räder 2 jeweils einen Radträger 6, einen ersten Querlenker 7 und einen zweiten Querlenker 8, die jeweils drehbar mit dem Radträger 6 verbunden sind.

In der Ausgangsstellung 9 der Radaufhängungsanordnung 1 ist der erste Querlenker 7 über dem zweiten Querlenker 8 angeordnet.

Jeweils eine Feder-Dämpfer-Einrichtung, die im gezeigten Ausführungsbeispiel als Feder-Dämpfer-Element 10 ausgebildet ist, verbindet, um eine Drehachse 24 drehbar, den zweiten Querlenker 8 mit einer Wippe 11. Die Feder-Dämpfer-Elemente 10 können insbesondere als Gasdruckfedern ausgebildet sein.

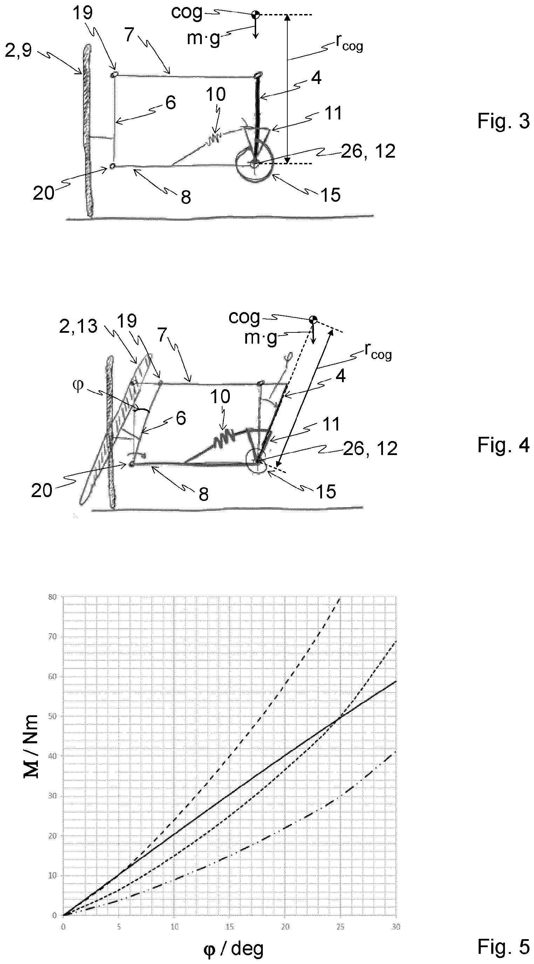

Die Feder-Dämpfer-Einrichtungen 10 sind an einander gegenüberliegenden Abschnitten der Wippe 11 um Drehachsen 25 drehbar mit der Wippe 11 verbunden, um bei einer Überführung der Radaufhängungsanordnung 1 aus der Ausgangsstellung 9 in eine geneigte Stellung 13 (vgl. Fig. 4) die Wippe 11 um eine ihr zugeordnete Drehachse 12 zu verdrehen.

In der Ausgangsstellung 9 sind die Drehachsen 25 bzw. die einander gegenüberliegenden Abschnitte der Wippe 11, an denen die Feder-Dämpfer-Elemente 10 drehbar mit der Wippe 11 verbunden sind, jeweils zwischen dem ersten Querlenker 7 und dem zweiten Querlenker 8 angeordnet, vgl. Fig. 2.

Weiters ist zumindest eine passive Stabilisierungsfeder 14, welche z.B. als modulare, d.h. leicht austauschbare, Torsionsfeder 15 ausgeführt sein kann (vgl. Fig. 2), vorgesehen. Diese Stabilisierungsfeder 14 ist mit dem Chassis 4 und der Wippe 11 verbunden, um die Radaufhängungsanordnung 1 aus der geneigten Stellung 13 in die Ausgangsstellung 9 zu drängen.

Es sei bemerkt, dass die Stabilisierungsfeder 14, wie in Fig. 1 angedeutet, auch mehrere Federelemente aufweisen kann, welche z.B. mindestens eine Linearfeder umfassen können.

Indem durch die Stabilisierungsfeder 14 die Radaufhängungsanordnung in die Ausgangsstellung 9 gedrängt wird, wird das neigbare Fahrzeug 5 in die senkrechte bzw. aufrechte Position gedrängt, was das Aufsteigen erleichtert bzw. für gehbehinderte Personen praktisch erst ermöglicht.

Im dargestellten Ausführungsbeispiel ist für den Antrieb des Fahrzeugs 5 ein Elektromotor (nicht dargestellt) vorgesehen, der von einer im bzw. am Fahrzeug 5 angeordneten Batterie (nicht dargestellt) mit Energie versorgt wird.

Fig. 2 zeigt die erfindungsgemäße Radaufhängungsanordnung 1 in Ausgangsstellung 9 im eingebauten Zustand in einem neigbaren Dreirad 5. Neben den in Fig. 1 gezeigten und zuvor beschriebenen Elementen der Radaufhängungsanordnung 1 ist insbesondere das Chassis 4 und ein Winkel $\alpha$ zwischen Längsachsen 16 der Feder-Dämpfer-Elemente 10 gezeigt, wobei der Winkel $\alpha$ größer als 90°, vorzugsweise größer als 120°, ist.

In Ausgangsstellung 9 wird dieser Winkel $\alpha$ durch die Laufebene eines Hinterrades 3 symmetrisch geteilt.

Beim Übergang von der Ausgangsstellung 9 in die geneigte Stellung 13 (vgl. Fig. 4) drehen sich erster Querlenker 7 und zweiter Querlenker 8 relativ zum Radträger 6 um eine erste Querlenkerdrehachse 19 bzw. um eine zweite Querlenkerdrehachse 20. Der Radträger 6 ist dabei in einen ersten Abschnitt 17 und einen zweiten Abschnitt 18 unterteilt, wobei erster Abschnitt 17 des Radträgers 6 und zweiter Abschnitt 18 des Radträgers 6 um eine Schwenkachse 22 drehbar verbunden sind. Die Radachsen 21 sind am zweiten Abschnitt 18 angeordnet bzw. montiert. Entsprechend sind die an den Radachsen 21 montierten Vorderräder 2 lenkbar.

Im dargestellten Ausführungsbeispiel sind die Querlenkerdrehachsen 19, 20 - ebenso wie die Drehachsen 24, 25 und wie eine Verdrehachse 26 der Torsionsfeder 15 - parallel zur Drehachse 12 der Wippe 11, die wiederum parallel zu einer Längsachse des Fahrzeugs 5 ist.

Fig. 3 und Fig. 4 zeigen schematisch einen Teilausschnitt der erfindungsgemäßen Radaufhängungsanordnung 1 umfassend einen Ausschnitt des Chassis 4, das Vorderrad 2, den ersten Querlenker 7 und den zweiten Querlenker 8, den Radträger 6, das Feder-Dämpfer-Element 10, die Wippe 11 und die Torsionsfeder 15. Die Verdrehachse 26 der Torsionsfeder 15 ist dabei deckungsgleich mit der Drehachse 12 der Wippe 11.

Während Fig. 3 den eben beschriebenen Ausschnitt der Radaufhängungsanordnung 1 in Ausgangsstellung 9 mit einem Wankwinkel $\varphi$ von 0° zeigt, zeigt Fig. 4 selbigen Ausschnitt in der geneigten Stellung 13 mit einem Wankwinkel $\varphi$ größer als 0°.

Klar erkennbar ist, dass sowohl in Ausgangsstellung 9 als auch in geneigter Stellung 13 die Laufebene des Vorderrads 2 parallel zum Radträger 6 ist.

Fig. 3 zeigt außerdem, wie sich das Vorderrad 2 infolge des Übergangs von der Ausgangsstellung 9 in die geneigte Stellung 13 neigt, sodass die erfindungsgemäße Radaufhängungsanordnung 1 zum Einbau in das neigbare Dreirad 5 geeignet ist.

Fig. 5 zeigt ein Diagramm eines zu stützenden Moments in Abhängigkeit des Wankwinkels $\varphi$ und entsprechende Torsionsmomente für drei unterschiedliche Torsionsfederkennlinien, die durch einfachen Tausch der Torsionsfeder 15 praktisch realisiert werden können.

Aus Relativwinkel zwischen Wippe 11 und Torsionsfeder 15 ergibt sich das rückstellende Torsionsmoment am Chassis 4. Bei statischer Betrachtung kann das zu stützende Moment aus dem Zusammenhang

$$M = m \cdot g \cdot r_{cog} \cdot \sin \varphi$$

mit Torsionsmoment **M** an der Wippe 11, Masse **m** im Schwerpunkt cog, Erdbeschleunigung **g,** Abstand **$r_{cog}$** zwischen der Drehachse 12 der Wippe 11 bzw. der Verdrehachse 26 der Torsionsfeder 15 und dem Schwerpunkt cog und mit Wankwinkel $\varphi$ des Fahrzeugs errechnet werden, vgl. Fig. 3 und Fig. 4, wobei der nach unten weisende Pfeil die sich ergebende Kraft **m·g** darstellt.

Das Torsionsmoment **M** ist in Fig. 5 durch die durchgezogene Linie dargestellt. Unterhalb $\varphi$ = **30°** liegt ein nahezu linearer Verlauf vor. Die punktierte, strichlierte und strichpunktierte reale Kennlinie in Fig. 5 stellt drei verschiedene Verläufe des Stützmomentes der Torsionsfedern 15 dar.

Für den quasistatischen Fall (beispielsweise langsame Schrägfahrt über einen abschüssigen Hang) bedeutet ein Gleichgewicht, dass das Chassis 4 mit Fahrer zu einem gegebenen Wankwinkel $\varphi$ nicht weiter wankt. In Fig. 5 entspricht diesem Fall der Bereich rechts (also bei größeren Wankwinkeln) vom jeweiligen Schnittpunkt der durchgehenden Geraden und der jeweiligen realen Kennlinie.

Der Fall, dass das Chassis 4 mit dem Fahrer weiter einkippt, entspricht dem Bereich links (also bei kleineren Wankwinkeln) vom genannten Schnittpunkt.

Es ist aus Fig. 5 ersichtlich, dass es durch die modulare Ausführung der Torsionsfeder 15 und ihrer damit einhergehenden Austauschbarkeit möglich ist, ein neigbares Fahrzeug 5 hinsichtlich seines Wankverhaltens in Abhängigkeit von Fahrergewicht sowie von individuellen Wünschen und Erfahrungen des Fahrers problemlos anzupassen, sodass die erfindungsgemäße Radaufhängungsanordnung 1 dem neigbaren Fahrzeug 5 ein Fahrverhalten ähnlich dem eines Zweirades verleiht, wobei gleichzeitig eine Erhöhung der Sicherheit durch die Stützwirkung der Radaufhängungsanordnung 1 erreicht wird.

BEZUGSZEICHENLISTE

| | |
|---|---|
| 1 | Radaufhängungsanordnung |
| 2 | Vorderrad |
| 3 | Hinterrad |
| 4 | Chassis |
| 5 | Neigbares Dreirad |
| 6 | Radträger |
| 7 | Erster Querlenker |
| 8 | Zweiter Querlenker |
| 9 | Ausgangsstellung |
| 10 | Feder-Dämpfer-Element |
| 11 | Wippe |
| 12 | Drehachse der Wippe |

13    Geneigte Stellung
14    Stabilisierungsfederelement
15    Torsionsfeder
16    Längsachse des Feder-Dämpfer-Elements
17    Erster Abschnitt des Radträgers
18    Zweiter Abschnitt des Radträgers
19    Erste Querlenkerdrehachse
20    Zweite Querlenkerdrehachse
21    Radachse
22    Schwenkachse
23    Anbindungspunkt des Chassis
24    Drehachse des Feder-Dämpfer-Elements am zweiten Querlenker
25    Drehachse des Feder-Dämpfer-Elements an der Wippe
26    Verdrehachse der Torsionsfeder
$\varphi$    Wankwinkel
$\alpha$    Winkel zwischen den Längsachsen der Feder-Dämpfer-Elemente
cog    Schwerpunkt
m    Masse im Schwerpunkt
g    Erdbeschleunigung
$r_{cog}$    Abstand zwischen der Drehachse der Wippe und dem Schwerpunkt

**Patentansprüche**

1. Radaufhängungsanordnung (1) zur Anbindung von zwei einander gegenüberliegenden Rädern (2) an ein Chassis (4) eines neigbaren Fahrzeugs, insbesondere neigbaren Dreirads (5), die Radaufhängungsanordnung (1) umfassend für jedes der zwei Räder (2) jeweils

   - einen Radträger (6),
   - einen ersten Querlenker (7) und einen zweiten Querlenker (8), die jeweils drehbar mit dem Radträger (6) verbunden und zur drehbaren Verbindung mit dem Chassis (4) eingerichtet sind, wobei in einer Ausgangsstellung (9) der Radaufhängungsanordnung (1) der erste Querlenker (7) über dem zweiten Querlenker (8) angeordnet ist,
   - eine Feder-Dämpfer-Einrichtung (10), die mit dem zweiten Querlenker (8) drehbar verbunden ist,

   die Radaufhängungsanordnung (1) weiters umfassend eine Wippe (11), die zur drehbaren Verbindung mit dem Chassis (4) eingerichtet ist, wobei die Wippe (11) um eine Drehachse (12) drehbar ist und wobei die Feder-Dämpfer-Einrichtungen (10) an einander gegenüberliegenden Abschnitten der Wippe (11) drehbar mit der Wippe (11) verbunden sind, um bei einer Überführung der Radaufhängungsanordnung (1) aus der Ausgangsstellung (9) in eine geneigte Stellung (13) die Wippe (11) um ihre Drehachse (12) zu verdrehen, **dadurch gekennzeich-**

**net, dass** zumindest eine passive Stabilisierungsfeder (14; 15) vorgesehen ist, die zur Verbindung mit dem Chassis (4) eingerichtet und mit der Wippe (11) verbunden ist, um die Radaufhängungsanordnung (1) aus der geneigten Stellung (13) in die Ausgangsstellung (9) zu drängen.

2. Radaufhängungsanordnung (1) nach Anspruch 1, **dadurch gekennzeichnet, dass** in der Ausgangsstellung (9) Längsachsen (16) der Feder-Dämpfer-Einrichtungen (10) einen Winkel ($\alpha$) einschließen, der größer als 90°, vorzugsweise größer als 120° ist.

3. Radaufhängungsanordnung (1) nach einem der Ansprüche 1 bis 2, **dadurch gekennzeichnet, dass** die zumindest eine passive Stabilisierungsfeder eine, insbesondere modulare, Torsionsfeder (15) mit progressiver Federkennlinie umfasst.

4. Radaufhängungsanordnung (1) nach einem der Ansprüche 1 bis 3, **dadurch gekennzeichnet, dass** die zumindest eine passive Stabilisierungsfeder zumindest ein Stabilisierungsfederelement (14) mit linearer Federkennlinie umfasst.

5. Radaufhängungsanordnung (1) nach einem der Ansprüche 1 bis 4, **dadurch gekennzeichnet, dass** die jeweilige Feder-Dämpfer-Einrichtung als Feder-Dämpfer-Element (10) ausgeführt ist.

6. Radaufhängungsanordnung (1) nach Anspruch 5, **dadurch gekennzeichnet, dass** das jeweilige Feder-Dämpfer-Element (10) als Gasdruckfeder ausgebildet ist.

7. Radaufhängungsanordnung (1) nach einem der Ansprüche 1 bis 6, **dadurch gekennzeichnet, dass** der jeweilige Radträger (6) einen ersten Abschnitt (17) und einen zweiten Abschnitt (18) aufweist, wobei der jeweilige erste Querlenker (7) mit dem ersten Abschnitt (17) um eine erste Querlenkerdrehachse (19) drehbar verbunden ist und der jeweilige zweite Querlenker (8) mit dem ersten Abschnitt (17) um eine parallel zur ersten Querlenkerdrehachse (19) verlaufende, zweite Querlenkerdrehachse (20) drehbar verbunden ist, und dass der zweite Abschnitt (18) zur drehbaren Verbindung mit einem der zwei Räder eingerichtet ist und relativ zum ersten Abschnitt (17) um eine Schwenkachse (22) verschwenkbar ist, wobei die Schwenkachse (22) normal auf die erste Querlenkerdrehachse (19) und die zweite Querlenkerdrehachse (20) steht.

8. Radaufhängungsanordnung (1) nach einem der Ansprüche 1 bis 7, **dadurch gekennzeichnet, dass** die einander gegenüberliegenden Abschnitte der Wippe (11), an denen die Feder-Dämpfer-Einrichtungen (10) drehbar mit der Wippe (11) verbunden sind, in der Ausgangsstellung (9) jeweils zwischen dem ersten Querlenker (7) und dem zweiten Querlenker (8) angeordnet sind.

9. Neigbares Fahrzeug, insbesondere neigbares Dreirad (5), umfassend eine Radaufhängungsanordnung (1) nach einem der Ansprüche 1 bis 8, mit der zwei einander gegenüberliegende Räder (2) an ein Chassis (4) des neigbaren Fahrzeugs (5) angebunden sind, wobei die ersten Querlenker (7) und die zweiten Querlenker (8) drehbar mit dem Chassis (4) verbunden sind, wobei die Wippe (11) drehbar mit dem Chassis (4) verbunden ist und wobei die zumindest eine passive Stabilisierungsfeder (14; 15) mit dem Chassis (4) verbunden ist.

10. Neigbares Fahrzeug (5) nach Anspruch 9, **dadurch gekennzeichnet, dass** die zwei Räder lenkbare Vorderräder (2) sind.

11. Neigbares Fahrzeug (5) nach einem der Ansprüche 9 bis 10, **dadurch gekennzeichnet, dass** ein Elektromotor für den Antrieb des neigbaren Fahrzeugs (5) vorgesehen ist.

12. Neigbares Fahrzeug (5) nach einem der Ansprüche 9 bis 11, **dadurch gekennzeichnet, dass** Pedale vorgesehen sind, um das neigbare Fahrzeug (5) durch Muskelkraft antreiben zu können, wobei ein Sperrmechanismus vorgesehen ist, um das Verdrehen der Wippe (11) um ihre Drehachse (12) zu verhindern.

Fig. 1

Fig. 2

Fig. 3

Fig. 4

Fig. 5

Europäisches
Patentamt
European
Patent Office
Office européen
des brevets

# EUROPÄISCHER RECHERCHENBERICHT

Nummer der Anmeldung

EP 24 16 3266

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | US 7 607 695 B2 (MOULENE DAVID [FR] ET AL) 27. Oktober 2009 (2009-10-27) * Zusammenfassung; Abbildungen 7,8 * ----- | 1,3-12 | INV. B62K5/08 B62K5/10 |
| A | US 7 568 541 B2 (DELPHI TECH INC [US]; HARLEY DAVIDSON MOTOR CO INC) 4. August 2009 (2009-08-04) * Zusammenfassung; Abbildungen * ----- | 1 | |

**RECHERCHIERTE SACHGEBIETE (IPC)**

B62K
B60G

Der vorliegende Recherchenbericht wurde für alle Patentansprüche erstellt

| Recherchenort | Abschlußdatum der Recherche | Prüfer |
|---|---|---|
| Den Haag | 24. Juli 2024 | Wagner, Helmut |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument
.......................................................
& : Mitglied der gleichen Patentfamilie, übereinstimmendes Dokument

EPO FORM 1503 03.82 (P04C03)

**ANHANG ZUM EUROPÄISCHEN RECHERCHENBERICHT**
**ÜBER DIE EUROPÄISCHE PATENTANMELDUNG NR.**                    EP 24 16 3266

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

24-07-2024

| Im Recherchenbericht angeführtes Patentdokument | Datum der Veröffentlichung | Mitglied(er) der Patentfamilie | Datum der Veröffentlichung |
|---|---|---|---|
| US 7607695 B2 | 27-10-2009 | AT    E416097 T1 | 15-12-2008 |
|  |  | CA   2572722 A1 | 12-01-2006 |
|  |  | EP   1773609 A1 | 18-04-2007 |
|  |  | ES   2318524 T3 | 01-05-2009 |
|  |  | FR   2872773 A1 | 13-01-2006 |
|  |  | JP   5129565 B2 | 30-01-2013 |
|  |  | JP 2008505797 A | 28-02-2008 |
|  |  | JP 2012091787 A | 17-05-2012 |
|  |  | PL   1773609 T3 | 31-07-2009 |
|  |  | US 2008197597 A1 | 21-08-2008 |
|  |  | WO 2006003489 A1 | 12-01-2006 |
| US 7568541 B2 | 04-08-2009 | DE 102006022134 A1 | 30-11-2006 |
|  |  | JP   4845585 B2 | 28-12-2011 |
|  |  | JP 2006315674 A | 24-11-2006 |
|  |  | US 2006255550 A1 | 16-11-2006 |

EPO FORM P0461

Für nähere Einzelheiten zu diesem Anhang : siehe Amtsblatt des Europäischen Patentamts, Nr.12/82

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 3056418 A1